# FASCICULE DE BREVET EUROPEEN

(11) **EP 3 365 608 B1**
(45) Date de publication et mention de la délivrance du brevet: **26.02.2020**
(21) Numéro de dépôt: 16785123.7
(22) Date de dépôt: 20.10.2016
(51) Int. Cl.: F24F 5/00, F24F 3/147

(54) **ECHANGEUR ENTHALPIQUE POUR PUITS CLIMATIQUE**
ENTHALPIEAUSTAUSCHER FÜR ERDGEKOPPELTE WÄRMETAUSCHER
ENTHALPY EXCHANGER FOR GROUND-COUPLED HEAT EXCHANGER

(30) Priorité: 22.10.2015 FR 1560078
(43) Date de publication de la demande: 29.08.2018
(73) Titulaire: Commissariat à l'Energie Atomique et aux Energies Alternatives, 75015 Paris (FR)
(72) Inventeur: DAVID, Benjamin, 73230 Saint-Jean-d'Arvey (FR); MARIOTTO, Mathieu, 38190 Villard-Bonnot (FR)
(74) Mandataire: Brevalex
(86) Numéro de dépôt international: PCT/EP2016/075194
(87) Numéro de publication internationale: WO 2017/068027

(56) Documents cités:
- EP-A2- 1 652 663
- WO-A1-2005/106343
- WO-A2-2013/092937
- FR-A3- 2 973 102
- US-A- 654 264
- US-A1- 2015 233 588

## Description

L'invention se rapporte au domaine de l'alimentation de bâtiments en air, de préférence pour l'habitat ou le tertiaire.

L'invention se rapporte plus précisément au domaine des puits climatiques, reposant sur l'exploitation de l'énergie sensible du sol situé à proximité du bâtiment à alimenter en air, comme cela est par exemple connu du document US 2015/233588. Ce type de système est également connu sous l'appellation « puits canadien » lorsque l'énergie sensible du sol est utilisée pour préchauffer de l'air frais, ou encore sous l'appellation « puits provençal » lorsque l'énergie sensible du sol est utilisée pour rafraîchir l'air à délivrer dans le bâtiment. D'une manière générale, un puits climatique consiste à faire circuler de l'air dans un conduit enterré sous le sol, avant d'insuffler cet air préchauffé / rafraîchi dans le bâtiment via un système de ventilation quelconque.

De tels puits climatiques sont par exemple décrits dans les demandes de brevets FR 2 439 948, EP 2 299 196, et FR 2 943 122. Si ces solutions s'avèrent intéressantes du fait qu'elles sont basées sur l'exploitation de l'énergie renouvelable disponible à proximité du bâtiment, elles se limitent à un échange thermique entre le sol et l'air circulant à travers le conduit. En effet, ces solutions conventionnelles de puits climatiques ne permettent pas d'agir sur une autre composante essentielle du confort thermique, à savoir le degré d'humidité de l'air insufflé dans le bâtiment. Or plus que la température en tant que telle, c'est le couple température-humidité qui régit la sensation de bien-être dans un logement.

Pour remédier à cet inconvénient, l'invention a pour objet un échangeur enthalpique pour puits climatique, ledit échangeur comprenant :
- un conduit d'air comportant une paroi latérale pourvue d'ouvertures ;
- une membrane imper-respirante disposée sur une surface extérieure de la paroi latérale du conduit d'air ou sur une surface intérieure de cette paroi latérale ; et
- une couche extérieure poreuse, perméable à la vapeur d'eau et conçue pour piéger un volume d'air tampon, ladite couche extérieure poreuse recouvrant l'ensemble formé par la paroi latérale du conduit d'air et la membrane imper-respirante.

L'invention répond de manière simple et performante à la problématique énoncée ci-dessus. En effet, elle permet d'améliorer le confort thermique au sein d'un bâtiment en contrôlant non seulement la température de l'air neuf, mais aussi son degré d'humidité. En d'autres termes, l'échangeur selon l'invention garantit un transfert d'énergie sensible, dû à un gradient de température entre le sol et le flux d'air traversant le conduit, via le volume d'air tampon en équilibre thermique avec le sol. De manière analogue, l'échangeur garantit également un transfert de vapeur d'eau dû à un gradient entre la pression partielle de la vapeur d'eau contenue dans le sol et la pression partielle de la vapeur d'eau dans le flux d'air, toujours via le volume d'air tampon renfermé dans la couche extérieure poreuse et en équilibre hygroscopique avec le sol.

La conception de l'échangeur selon l'invention, également dit « échangeur total », est avantageusement très simple. Le conduit d'air constitue une structure autoporteuse, capable de supporter intérieurement, ou de préférence extérieurement la membrane imper-respirante de très faible épaisseur. A cet égard, il est rappelé qu'une membrane imper-respirante est une membrane étanche à l'eau liquide et à l'air, et perméable à la vapeur d'eau. Ainsi, de la vapeur d'eau peut être échangée entre le volume d'air tampon et l'air circulant dans le conduit, en transitant par les ouvertures prévues à cet effet. Enfin, il est noté qu'en étant entourée de la couche extérieure poreuse, la membrane imper-respirante est avantageusement protégée des éventuelles agressions physiques du sol.

L'invention présente par ailleurs au moins l'une des caractéristiques optionnelles suivantes, prises isolément ou en combinaison.

La couche extérieure poreuse est un géotextile.

La couche extérieure poreuse présente une épaisseur comprise entre 1 et 50 mm.

La membrane imper-respirante présente une épaisseur comprise entre 1 et 500 µm.

Selon un premier mode de réalisation préféré de l'invention, l'échangeur est tel que :
- la membrane imper-respirante, disposée sur la surface extérieure de la paroi latérale du conduit d'air, présente une largeur supérieure à la circonférence extérieure de cette paroi latérale, de manière à définir deux rebords de membrane qui s'étendent radialement et qui se superposent selon une direction circonférentielle de la paroi latérale ;
- la couche extérieure poreuse présente une largeur supérieure à la circonférence extérieure de cette paroi latérale, de manière à définir deux rebords de couche extérieure qui s'étendent radialement et qui se superposent de part et d'autre des deux rebords de membrane selon la direction circonférentielle ;
- l'échangeur comporte un étrier de serrage enserrant la superposition des deux rebords de membrane et des deux rebords de couche extérieure.

Dans cette configuration, l'étrier de serrage s'étend de préférence sensiblement parallèlement à un axe longitudinal du conduit d'air, et présente une section en forme de U ouvert radialement vers l'intérieur.

Selon un second mode de réalisation préféré de l'invention, la membrane imper-respirante est collée sur au moins une zone de collage de la paroi latérale du conduit d'air.

Quel que soit le mode de réalisation envisagé, la superficie des ouvertures de la paroi latérale représente de préférence plus de 50% de la superficie totale de cette paroi latérale. Cela permet de favoriser l'échange massique de vapeur d'eau.

Pour assurer la tenue mécanique de l'échangeur tout en augmentant la superficie des ouvertures de la paroi latérale, le conduit d'air peut présenter une armature intérieure raccordée à la paroi latérale, l'armature intérieure comprenant de préférence un arbre central ainsi que des bras reliant l'arbre à la paroi latérale du conduit. De plus, la perturbation du flux d'air provoquée par la présence de cette armature intérieure favorise aussi bien les échanges thermique que massique.

Dans le premier et le second mode de réalisation décrits ci-dessus, les ouvertures sont de préférence agencées en quinconce sur la paroi latérale, ou en rangées axiales.

Selon un troisième mode de réalisation préféré de l'invention, la paroi latérale du conduit est une spirale s'étendant selon l'axe longitudinal du conduit et définissant une ouverture principale également en forme de spirale, la spirale étant interrompue de manière à former une pluralité de segments de spirale délimitant entre leurs extrémités en regard des ouvertures secondaires de la paroi latérale, chaque segment de spirale étant porté par au moins l'un des bras de l'armature intérieure du conduit.

Dans ce troisième mode de réalisation préféré, il est prévu au moins trois segments de spirale sur chaque tour de spirale, leur nombre pouvant néanmoins être supérieur à trois, sans sortir du cadre de l'invention.

Selon un quatrième mode de réalisation préféré de l'invention, l'échangeur enthalpique comprend plusieurs modules de conduit d'air assemblés axialement les uns aux autres, lesdits modules présentant de préférence une portion mâle d'accouplement mécanique à l'une de ses extrémités axiales, ainsi qu'une portion femelle d'accouplement mécanique à l'autre de ses extrémités axiales. En d'autres termes, l'échangeur est réalisé à l'aide de tronçons axiaux de conduit accouplés bout-à-bout, ce qui permet de faciliter la fabrication du conduit d'air, surtout lorsque l'échangeur s'étend sur une distance élevée pouvant dépasser 20 m.

De préférence, l'échangeur comporte au moins deux modules de conduit d'air de conception identique agencés de manière directement consécutive au sein de l'échangeur, et présentant respectivement deux positions angulaires distinctes. Lorsque ces modules de conduit d'air sont équipés de l'armature intérieure, le décalage angulaire de celle-ci permet d'accentuer la perturbation du flux d'air, et ainsi d'améliorer les transferts thermique et massique.

L'invention a également pour objet un puits climatique pour l'alimentation en air d'un bâtiment, comprenant au moins un échangeur enthalpique tel que décrit ci-dessus.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique d'un puits climatique selon la présente invention ;
- la figure 2 représente un échangeur enthalpique équipant le puits climatique, cet échangeur se présentant sous la forme d'un premier mode de réalisation préféré de l'invention ;
- la figure 3 est une vue en perspective du conduit d'air équipant l'échangeur montré sur la figure précédente ;
- la figure 4 est une vue de côté du conduit d'air montré sur la figure précédente ;
- la figure 5 est une vue analogue à celle de la figure 3, avec le conduit d'air recouvert d'une membrane imper-respirante ;
- la figure 5a est une vue de côté de celle montrée sur la figure 5 ;
- la figure 6 est une vue analogue à celle de la figure 5, avec la membrane imper-respirante recouverte d'une couche extérieure poreuse ;
- la figure 6a est une vue de côté de celle montrée sur la figure 6 ;
- la figure 7 est une vue analogue à celle de la figure 6, avec les rebords de membrane et les rebords de couche extérieure enserrés dans un étrier de serrage ;
- la figure 8 un échangeur enthalpique se présentant sous la forme d'un second mode de réalisation préféré de l'invention ;
- les figures 9a à 9c représentent différentes vues du conduit d'air équipant un échangeur enthalpique se présentant sous la forme d'un troisième mode de réalisation préféré de l'invention;
- la figure 10 est une vue de côté de l'échangeur enthalpique montré sur la figure 8 ;
- les figures 11a et 11b représentent différentes vues d'un module de conduit d'air destiné à équiper un échangeur enthalpique se présentant sous la forme d'un quatrième mode de réalisation préféré de l'invention ; et
- les figures 12a et 12b représentent différentes vues en perspective de l'assemblage de deux modules de conduit d'air, du type de celui montré sur les figures 11a et 11b.

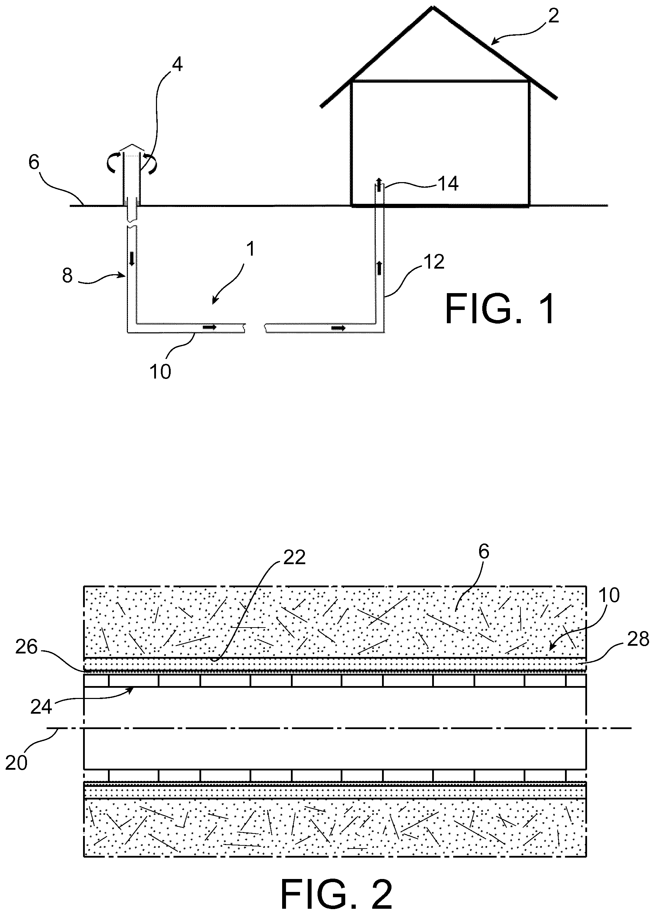

En référence tout d'abord à la figure 1, il est représenté un puits climatique 1 selon l'invention, pour l'alimentation en air d'un bâtiment 2. Le puits climatique 1 comprend une entrée d'air 4 faisant saillie du sol 6 sur lequel se trouve la bâtiment 2. Il comprend un conduit d'amenée d'air 8 s'enfonçant dans le sol, et alimentant un échangeur enthalpique enterré 10, spécifique à la présente invention. L'échangeur 10 chemine horizontalement dans le sol, et présente une extrémité aval raccordée à un conduit d'alimentation en air 12, dont la sortie d'air 14 débouche à l'intérieur du bâtiment 2. A cet égard, il est indiqué que l'air neuf circulant dans l'échangeur enthalpique 10 peut être délivré directement au bâtiment par la sortie d'air 14 comme cela a été représenté sur la figure 1, ou bien cet air neuf peut d'abord transiter par un système d'échangeur à double flux d'air (non représenté). Dans ce dernier cas, l'échangeur à double flux permet d'assurer un transfert thermique et éventuellement massique entre un flux d'air sortant du bâtiment 2, et le flux d'air neuf provenant du puits climatique.

L'échangeur enthalpique 10 est agencé à une profondeur supérieure à 0,4 m dans le sol, et préférentiellement supérieure à 2m, par exemple à 3 m de profondeur. Sa longueur peut atteindre 20 à 40 m.

D'une manière générale, l'échangeur 10 présente une fonction d'échange sensible (échange sur le gradient de température), ainsi qu'un échange massique de vapeur d'eau avec le sol. Plus concrètement, en conditions hivernales, l'air extérieur est froid et sec. Lors de sa circulation au travers de l'échangeur enthalpique 10, il se réchauffe et se charge en humidité provenant du sol, pour améliorer les conditions de confort thermique de cet air délivré dans le bâtiment 2. A l'inverse, en été, l'air extérieur est souvent chaud et légèrement trop humide. Lors de son passage au sein de l'échangeur, cet air neuf se rafraîchi et se déshumidifie au profit d'un sol plus sec, résultant des faibles précipitations en cette saison.

Un premier mode de réalisation préféré de cet échangeur enthalpique 10 va tout d'abord être décrit en référence aux figures 2 à 7.

L'échangeur enthalpique 10 présente une forme générale cylindrique de section circulaire, d'axe longitudinal 20 autour duquel ses composants sont centrés. Cet échangeur 10 chemine à travers un passage 22 de forme correspondante, pratiqué dans le sol 6.

L'échangeur 10 comporte trois composants, à savoir un conduit d'air 24, une membrane imper-respirante 26 et une couche extérieure poreuse 28. Ces trois composants 24, 26, 28 sont agencés de sorte que la membrane 26 se trouve enserrée entre le conduit d'air et la couche extérieure poreuse.

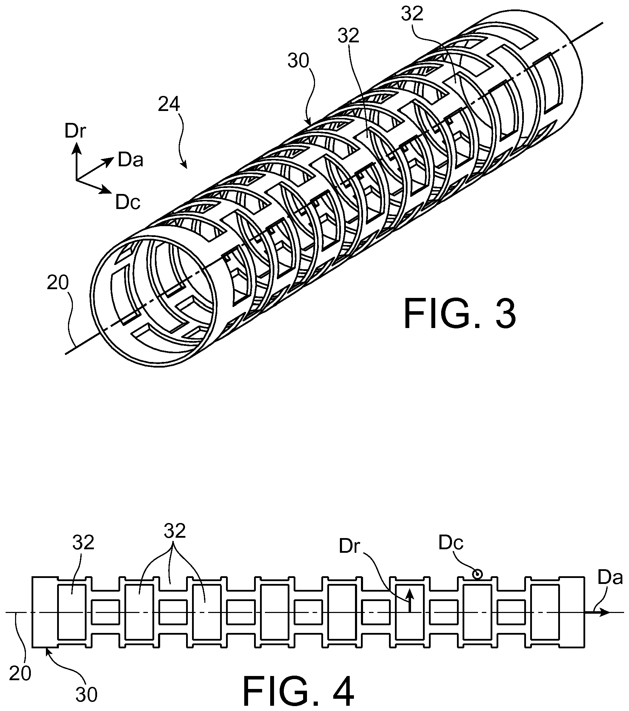

Le conduit d'air 24 présente une forme générale cylindrique selon l'axe longitudinal 20. Comme cela est le mieux visible sur les figures 3 et 4, le conduit 24 comporte une paroi latérale 30 pourvue d'ouvertures 32 à travers lesquelles la vapeur d'eau peut transiter librement, selon la direction radiale Dr. Ici, les ouvertures 32 présentent une forme générale rectangulaire tout en suivant la courbure du conduit. Ces ouvertures 32 sont agencées en quinconce sur la paroi latérale 30. C'est-à-dire que cette paroi latérale intègre des rangées d'ouvertures 32 s'étendant selon la direction circonférentielle Dc, ces rangées se succédant selon la direction axiale Da. Les rangées d'ouvertures sont ainsi décalées angulairement les unes des autres, afin de procurer la disposition en quinconce propice à l'obtention d'une résistance mécanique satisfaisante.

Cette résistance mécanique élevée de la paroi latérale ajourée 30 est conservée même avec une superficie cumulée des ouvertures 32 représentant plus de 50% de la superficie totale de cette paroi 30.

Le conduit d'air 24 est par exemple réalisé dans une matière du type TPC, PEHD souple ou rigide, ou encore PVC. Il s'étend sur la totalité de la longueur de l'échangeur, c'est-à-dire préférentiellement sur 20 à 40 m. Cependant, il peut être réalisé à partir de tronçons axiaux assemblés les uns aux autres, sans sortir du cadre de l'invention.

Il présente une épaisseur de l'ordre de 2 à 50mm, et un diamètre extérieur de l'ordre de 40 à 500 mm selon que le système soit destiné à du petit habitat individuel, ou à du logement collectif ou tertiaire nécessitant de gros débits de ventilation.

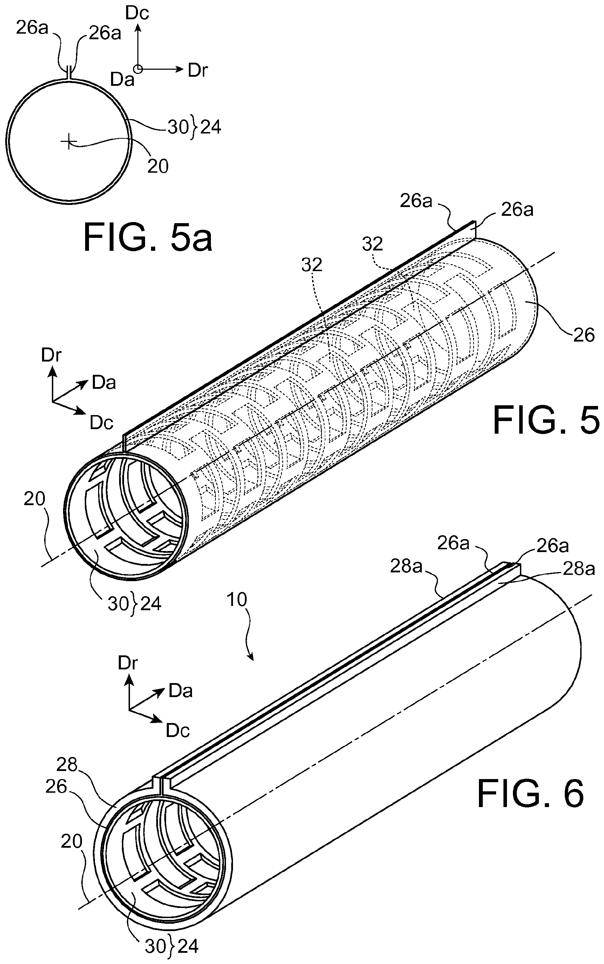

Autour de la surface extérieure de la paroi latérale 30, il est disposé la membrane imper-respirante 26 qui recouvre l'intégralité de cette paroi, y compris les ouvertures 32. Cette membrane est visible sur les figures 5 et 5a.

Il s'agit de préférence d'un tissu imper-respirant, par exemple une membrane commercialisée sous la référence Nafion® par la société DuPont de Nemours.

Une telle membrane Nafion® est particulièrement intéressante pour la présente application en raison de sa forte perméabilité à la vapeur d'eau, de la reproductibilité de ses caractéristiques, et de sa faible inertie hydrique notamment grâce à sa faible épaisseur.

Cependant d'autres matériaux peuvent être utilisés pour la réalisation de la membrane 26, en particulier tous les tissus imper-respirants, comme la référence Gore-Tex® commercialisée par la société W L Gore, Microtech® commercialisée par la société Travis Textiles, Pebax® commercialisée par la société Arkema, Arnitel® commercialisée par la société DSM, Permax® commercialisée par la société Lubrizol, ainsi que l'ensemble des références de tissus imper-respirants citées dans le tableau *de la publication* « Mukhopadhyay, A. and M. Vinay Kumar, A Review on Designing the Waterproof Breathable Fabrics Part II: Construction and Suitability of Breathable Fabrics for Different Uses. Journal of Industrial Textiles, 2008. 38(1): p. 17-41 »*.*

D'autres exemples de membranes peuvent également convenir à l'utilisation souhaitée, par exemple les membranes commercialisées sous les références Dpoint®, ou encore sympatex®.

Son épaisseur est très fine, de l'ordre de 1 à 500 µm. En vue de sa fixation autour du conduit d'air 24, la membrane imper-respirante 26 présente une largeur supérieure à la circonférence extérieure de cette paroi latérale 30. Ainsi, cela permet de disposer de deux rebords de membrane 26a qui s'étendent radialement et qui se superposent selon la direction circonférentielle Dc de la paroi 30.

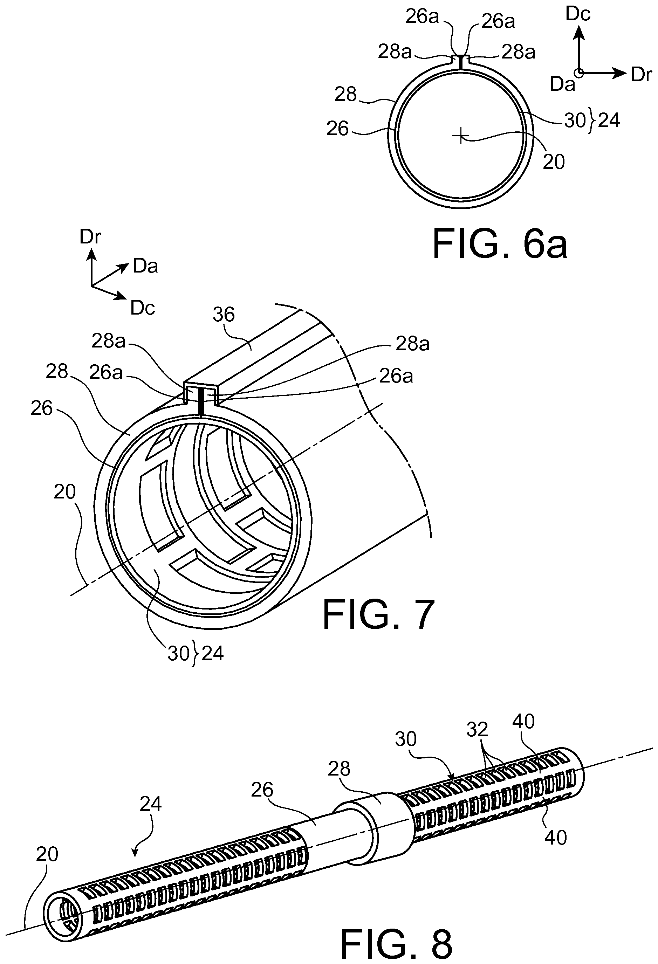

En référence à présent aux figures 6 et 6a, l'échangeur 10 comporte la couche extérieure poreuse 28, recouvrant entièrement la membrane 26 et protégeant donc celle-ci des éventuelles agressions du sol. La couche 28 présente une épaisseur de l'ordre de 1 à 50 mm. Elle est réalisée avec un géotextile, par exemple les géotextiles proposés par le fabriquant Tenax©, parmi lesquels le produit Tenax GNT©. Une autre solution peut résider dans le produit GREEN ARMOR© commercialisé par le fabriquant EUROTEC©, ou encore le géocomposite 3D Geonet© commercialisé par le fabriquant HANOVO©. De plus, un simple traillis polymère, associé à un géotextile plan, peut aussi être une solution fonctionnellement acceptable. Enfin, des tissus métalliques de type GANTOIS© sont aussi une solution envisageable, qui aurait en outre l'avantage d'améliorer les transferts thermiques dans la structure poreuse.

Ici également, la couche extérieure poreuse 28 présente une largeur supérieure à la circonférence extérieure de cette paroi latérale 30, de manière à définir deux rebords de couche extérieure 28a visibles sur les figures 6 et 6a. Ces rebords 28a s'étendent selon la direction radiale Dr, et se superposent de part et d'autre des deux rebords de membrane 26a selon la direction circonférentielle Dc, également dénommée direction tangentielle.

Les quatre rebords superposés 26a, 28a sont ensuite enserrés dans un étrier de serrage 36 visible sur la figure 7, présentant une section transversale en forme de U ouvert radialement vers l'intérieur.

La couche extérieure poreuse 28 est conçue pour piéger / retenir un volume d'air tampon utile pour le fonctionnement de l'échangeur.

En effet, ce volume d'air stagnant dans les pores de la couche extérieure poreuse 28 se trouve tout d'abord en équilibre thermique avec la température du sol qui l'entoure. De plus, ce volume d'air tampon est libre de se charger ou de se décharger en humidité en fonction de la capacité hygroscopique du sol.

Ce volume d'air tampon peut échanger, avec l'air circulant dans le conduit 24, de l'énergie sensible et une certaine masse de vapeur d'eau à travers la membrane imper-respirante 26 et les ouvertures 32. Cet échange enthalpique est alors fonction des gradients de température et de pression partielle de vapeur de part et d'autre de la membrane 26.

Selon un second mode de réalisation montré sur la figure 8, les ouvertures 32 de la paroi latérale 30 du conduit d'air 24 sont agencées en rangées axiales. Entre ces rangées axiales, la surface extérieure de la paroi latérale 30 laisse apparaître des zones de collage axiales 40 sur lesquelles la membrane 26 peut être collée pour assurer sa fixation. Il en est de même pour la couche en géotextile 28, qui peut être collée sur la membrane 26 en regard de ces zones de collage 40, en forme de pistes axiales.

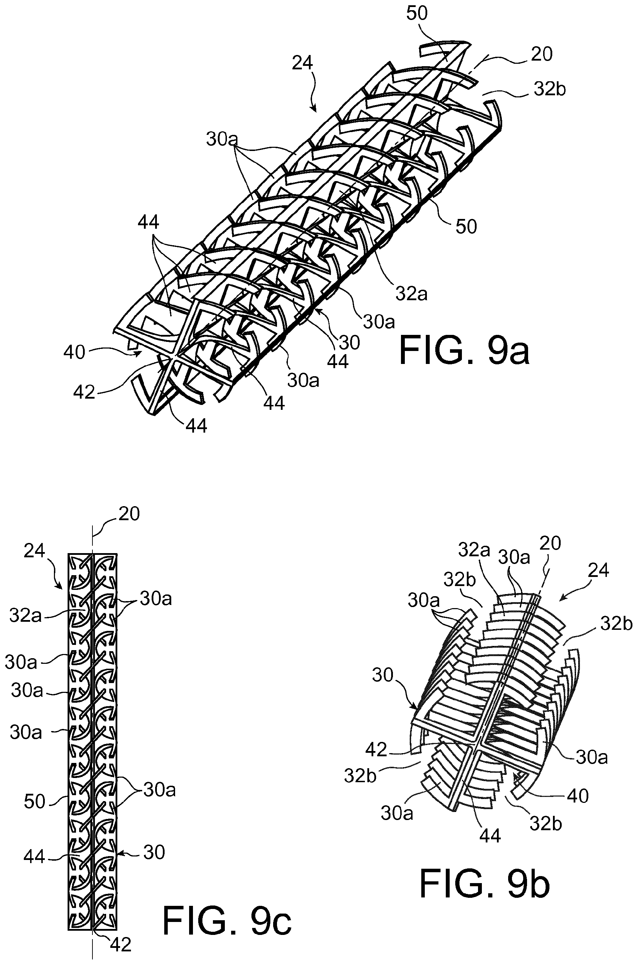

Selon un troisième mode de réalisation montré sur les figures 9a à 10, le conduit d'air 24 présente une armature intérieure 40 raccordée à la paroi latérale 30. Ici, l'armature intérieure 40 comprend un arbre central 42 ainsi que des bras sensiblement radiaux 44, reliant l'arbre 42 à la surface intérieure de la paroi latérale 30. Cette armature intérieure 40 permet de rigidifier encore davantage le conduit d'air 24, et donc d'augmenter la superficie des ouvertures 32 pour maximiser les échanges enthalpiques. Ces échanges sont par ailleurs favorisés par les perturbations de l'écoulement d'air provoquées par les bras radiaux 44.

De plus, dans ce troisième mode de réalisation préféré de l'invention, la paroi latérale 30 est une spirale interrompue, s'étendant selon l'axe longitudinal 20. Cette spirale définit tout d'abord une ouverture principale 32a également en forme de spirale, et cheminant entre les parties pleines hélicoïdales de la paroi 30. En outre, en étant interrompue, la spirale forme une pluralité de segments de spirale 30a espacés les uns des autres et chacun porté par l'un des bras radiaux 44. Entre leurs extrémités en regard selon la direction hélicoïdale, les segments de spirale 30a définissent des ouvertures secondaires 32b à travers la paroi latérale.

La superficie cumulée des ouvertures 32a, 32b peut alors atteindre plus de 70% de la superficie totale de la paroi latérale 30.

En outre, des renforts axiaux 50 peuvent relier les segments 30a d'une même rangée axiale de segments, ces renforts étant alors préférentiellement agencés à la périphérie de la paroi latérale 30. Entre ces rangées axiales de segments 30a, la paroi 30 définit des rangées axiales d'ouvertures secondaires 32b, par exemple quatre rangées espacées circonférentiellement les unes des autres, de manière régulière. En effet, il est ici prévu que sur chaque tour, la spirale 30 soit interrompue quatre fois, laissant ainsi apparaître quatre segments de spirale 30a par tour.

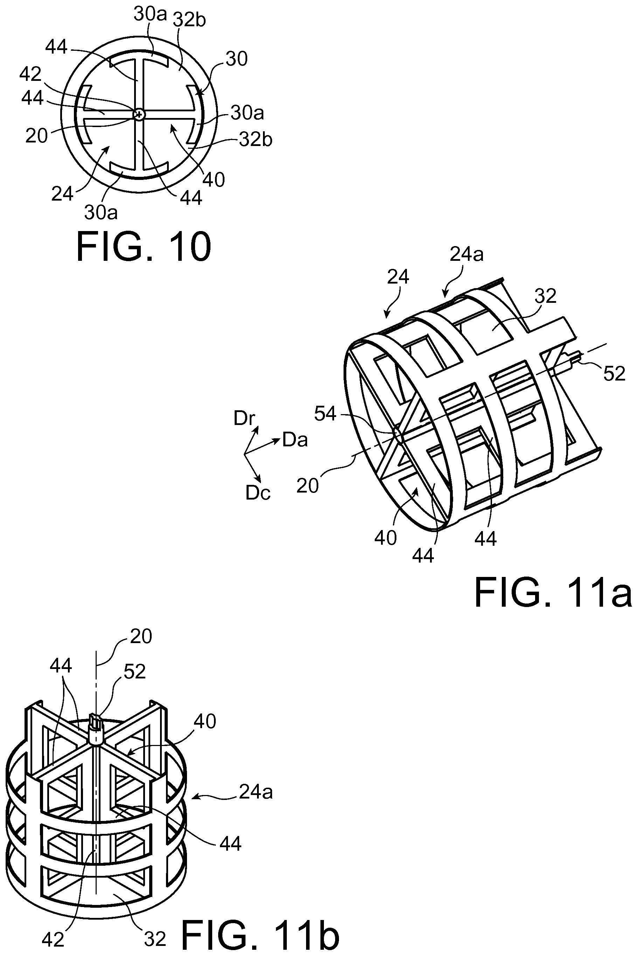

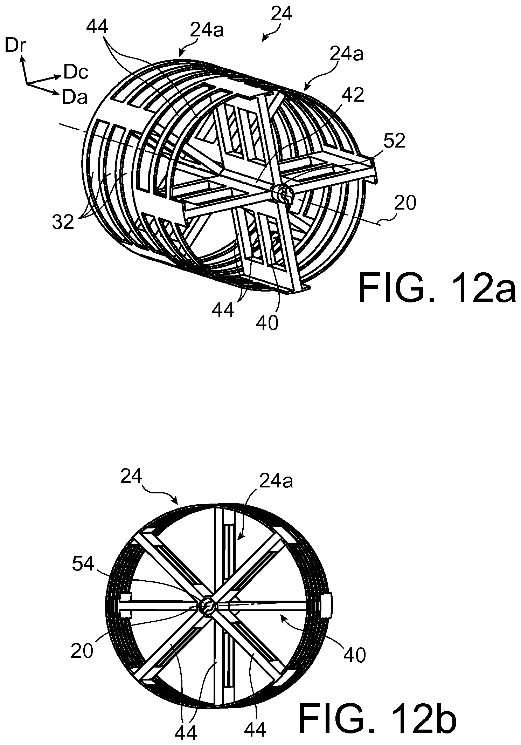

Selon un quatrième mode de réalisation envisagé, représenté sur les figures 11a à 12b, le conduit d'air 24 est segmenté selon la direction axiale Da en plusieurs modules de conduit d'air 24a de conception identique. Cela facilite la réalisation du conduit d'air, car les modules 24a présentent des dimensions axiales bien inférieures à la longueur totale de l'échangeur 10. Chaque module 24a présente une portion mâle 52 d'accouplement mécanique à l'une de ses extrémités axiales, ainsi qu'une portion femelle 54 d'accouplement mécanique à l'autre extrémité. Dans ce mode de réalisation, chaque module 24a intègre une armature intérieure 40, avec les bras radiaux 44. Ainsi, lorsque deux modules 24a directement consécutifs sont assemblés l'un à l'autre par le biais des leurs portions d'accouplement, il est possible de les décaler angulairement l'un par rapport à l'autre afin que les bras radiaux 44 se trouvent dans des plans axiaux distincts. Cela favorise les perturbations du flux d'air neuf traversant le conduit 24, et augmente par conséquent les échanges enthalpiques.

Dans ce quatrième mode de réalisation, la membrane 26 et la couche extérieure poreuse 28 s'étendent chacune d'un seul tenant autour des modules 24a accouplés, sur la longueur cumulée de ces derniers.

Bien entendu, diverses modifications peuvent être apportées par l'homme du métier à l'invention qui vient d'être décrite, uniquement à titre d'exemples non limitatifs. En particulier, les quatre modes de réalisation décrits sont combinables, à savoir qu'ils présentent des caractéristiques interchangeables. Par exemple, la conception de la paroi latérale du conduit du troisième mode de réalisation peut être conservée, tout en adoptant une configuration tronçonnée en modules axiaux telle que décrite dans le quatrième mode de réalisation. Selon un autre exemple, pour le troisième et le quatrième mode de réalisation, la fixation de la membrane imper-respirante sur la paroi latérale du conduit peut s'effectuer selon l'une quelconque des solutions proposées dans le premier et le seconde mode de réalisation.

## Revendications

1. Echangeur enthalpique (10) pour puits climatique (1), ledit échangeur comprenant :
- un conduit d'air (24) comportant une paroi latérale (30) pourvue d'ouvertures (32) ;
- une membrane imper-respirante (26) disposée sur une surface extérieure de la paroi latérale (30) du conduit d'air ou sur une surface intérieure de cette paroi latérale ; et
**caractérisé en ce que** l'échangeur comporte en outre :
- une couche extérieure poreuse (28), perméable à la vapeur d'eau et conçue pour piéger un volume d'air tampon, ladite couche extérieure poreuse recouvrant l'ensemble formé par la paroi latérale (30) du conduit d'air et la membrane imper-respirante (26).

2. Echangeur enthalpique selon la revendication 1, dans lequel la couche extérieure poreuse (28) est un géotextile.

3. Echangeur enthalpique selon la revendication 1 ou la revendication 2, dans lequel la couche extérieure poreuse (28) présente une épaisseur comprise entre 1 et 50 mm.

4. Echangeur enthalpique selon l'une quelconque des revendications précédentes, dans lequel la membrane imper-respirante (26) présente une épaisseur comprise entre 1 et 500 µm.

5. Echangeur enthalpique selon l'une quelconque des revendications précédentes, dans lequel :
- la membrane imper-respirante (26), disposée sur la surface extérieure de la paroi latérale (30) du conduit d'air, présente une largeur supérieure à la circonférence extérieure de cette paroi latérale, de manière à définir deux rebords de membrane (26a) qui s'étendent radialement et qui se superposent selon une direction circonférentielle (Dc) de la paroi latérale ;
- la couche extérieure poreuse (28) présente une largeur supérieure à la circonférence extérieure de cette paroi latérale (30), de manière à définir deux rebords de couche extérieure (28a) qui s'étendent radialement et qui se superposent de part et d'autre des deux rebords de membrane (26a) selon la direction circonférentielle (Dc) ;
- l'échangeur comporte un étrier de serrage (36) enserrant la superposition des deux rebords de membrane (26a) et des deux rebords de couche extérieure (28a).

6. Echangeur enthalpique selon la revendication 5, dans lequel l'étrier de serrage (36) s'étend sensiblement parallèlement à un axe longitudinal (20) du conduit d'air (24), et présente une section en forme de U ouvert radialement vers l'intérieur.

7. Echangeur enthalpique selon l'une quelconque des revendications 1 à 4, dans lequel la membrane imper-respirante (26) est collée sur au moins une zone de collage (40) de la paroi latérale (30) du conduit d'air.

8. Echangeur enthalpique selon l'une quelconque des revendications précédentes, dans lequel la superficie des ouvertures (32) de la paroi latérale (30) représente plus de 50% de la superficie totale de cette paroi latérale.

9. Echangeur enthalpique selon l'une quelconque des revendications précédentes, dans lequel le conduit d'air (24) présente une armature intérieure (40) raccordée à la paroi latérale (30), l'armature intérieure comprenant de préférence un arbre central (42) ainsi que des bras (44) reliant l'arbre (42) à la paroi latérale (30) du conduit.

10. Echangeur enthalpique selon l'une quelconque des revendications précédentes, dans lequel les ouvertures (32) sont agencées en quinconce sur la paroi latérale.

11. Echangeur enthalpique selon la revendication 9, dans lequel la paroi latérale (30) du conduit est une spirale s'étendant selon l'axe longitudinal (20) du conduit et définissant une ouverture principale (32a) également en forme de spirale, la spirale étant interrompue de manière à former une pluralité de segments de spirale (30a) délimitant entre leurs extrémités en regard des ouvertures secondaires (32b) de la paroi latérale, chaque segment de spirale (30a) étant porté par au moins l'un des bras (44) de l'armature intérieure (40) du conduit.

12. Echangeur enthalpique selon la revendication 11, dans lequel il est prévu au moins trois segments de spirale (30a) sur chaque tour de spirale.

13. Echangeur enthalpique selon l'une quelconque des revendications précédentes, comprenant plusieurs modules de conduit d'air (24a) assemblés axialement les uns aux autres, lesdits modules (24a) présentant de préférence une portion mâle d'accouplement mécanique (52) à l'une de ses extrémités axiales, ainsi qu'une portion femelle d'accouplement mécanique (54) à l'autre de ses extrémités axiales.

14. Echangeur enthalpique selon la revendication 13, comprenant au moins deux modules de conduit d'air (24a) de conception identique agencés de manière directement consécutive au sein de l'échangeur, et présentant respectivement deux positions angulaires distinctes.

15. Puits climatique (1) pour l'alimentation en air d'un bâtiment (2), comprenant au moins un échangeur enthalpique (10) selon l'une quelconque des revendications précédentes.

## Patentansprüche

1. Enthalpieaustauscher (10) für einen Erdwärmetauscher (1), wobei der Austauscher umfasst:
- einen Luftkanal (24), umfassend eine mit Öffnungen (32) versehene Seitenwand (30),
- eine undurchlässige atmungsaktive Membran (26), die auf einer Außenfläche der Seitenwand (30) des Luftkanals oder auf einer Innenfläche dieser Seitenwand angeordnet ist; und
**dadurch gekennzeichnet, dass** der Austauscher ferner umfasst:
- eine poröse Außenschicht (28), die für Wasserdampf durchlässig ist und die geeignet ist, ein Puffervolumen Luft einzuschließen, wobei die poröse Außenschicht die durch die Seitenwand (30) des Luftkanals und die undurchlässige atmungsaktive Membran (26) gebildete Anordnung bedeckt.

2. Enthalpieaustauscher nach Anspruch 1, wobei die poröse Außenschicht (28) ein Geotextil ist.

3. Enthalpieaustauscher nach Anspruch 1 oder Anspruch 2, wobei die poröse Außenschicht (28) eine Dicke zwischen 1 und 50 mm aufweist.

4. Enthalpieaustauscher nach einem der vorstehenden Ansprüche, wobei die undurchlässige atmungsaktive Membran (26) eine Dicke zwischen 1 und 500 µm aufweist.

5. Enthalpieaustauscher nach einem der vorstehenden Ansprüche, wobei:
- die undurchlässige atmungsaktive Membran (26), die an der äußeren Oberfläche der Seitenwand (30) des Luftkanals angeordnet ist, eine Breite aufweist, die größer ist als der Außenumfang der Seitenwand, so dass zwei Membranränder (26a) definiert werden, die sich radial erstecken und sich in einer Umfangsrichtung (Dc) der Seitenwand überlagern;
- die poröse Außenschicht (28) eine Breite aufweist, die größer ist als der Außenumfang dieser Seitenwand (30), so dass zwei Ränder der Außenschicht (28a) definiert werden, die sich radial erstrecken und die sich in Umfangsrichtung (Dc) auf beiden Seiten der beiden Membranränder (26a) überlagern;
- der Austauscher einen Klemmbügel (36) umfasst, der die Überlagerung der beiden Membranränder (26a) und der beiden Ränder der Außenschicht (28a) umschließt.

6. Enthalpieaustauscher nach Anspruch 5, wobei sich der Klemmbügel (36) im Wesentlichen parallel zu einer Längsachse (20) des Luftkanals (24) erstreckt und einen radial nach innen offenen U-förmigen Querschnitt aufweist.

7. Enthalpieaustauscher nach einem der Ansprüche 1 bis 4, wobei die undurchlässige atmungsaktive Membran (26) auf wenigstens einen Klebebereich (40) der Seitenwand (30) des Luftkanals geklebt ist.

8. Enthalpieaustauscher nach einem der vorstehenden Ansprüche, wobei die Oberfläche der Öffnungen (32) in der Seitenwand (30) mehr als 50% der Gesamtoberfläche dieser Seitenwand beträgt.

9. Enthalpieaustauscher nach einem der vorstehenden Ansprüche, wobei der Luftkanal (24) einen mit der Seitenwand (30) verbundenen Innenrahmen (40) aufweist, wobei der Innenrahmen vorzugsweise eine zentrale Welle (42) und Arme (44) umfasst, die die Welle (42) mit der Seitenwand (30) des Kanals verbinden.

10. Enthalpieaustauscher nach einem der vorstehenden Ansprüche, wobei die Öffnungen (32) an der Seitenwand versetzt angeordnet sind.

11. Enthalpieaustauscher nach Anspruch 9, wobei die Seitenwand (30) des Kanals eine Spirale ist, die sich entlang der Längsachse (20) des Kanals erstreckt und eine Hauptöffnung (32a) ebenfalls in Form einer Spirale definiert, wobei die Spirale unterbrochen ist, so dass eine Vielzahl von Spiralsegmenten (30a) gebildet wird, die zwischen ihren gegenüberliegenden Enden Sekundäröffnungen (32b) der Seitenwand begrenzen, wobei jedes Spiralsegment (30a) von wenigstens einem der Arme (44) des Innenrahmens (40) des Kanals getragen wird.

12. Enthalpieaustauscher nach Anspruch 11, wobei wenigstens drei Spiralsegmente (30a) auf jeder Windung der Spirale vorgesehen sind.

13. Enthalpieaustauscher nach einem der vorstehenden Ansprüche, umfassend mehrere axial aneinander angebrachte Luftkanalmodule (24a), wobei die Module (24a) bevorzugt einen männlichen mechanischen Kopplungsabschnitt (52) an einem ihrer axialen Enden und einen weiblichen mechanischen Kopplungsabschnitt (54) an dem anderen ihrer axialen Enden aufweisen.

14. Enthalpieaustauscher nach Anspruch 13, umfassend wenigstens zwei Luftkanalmodule (24a) identischer Ausbildung, die direkt aufeinanderfolgend im Austauscher angeordnet sind und jeweils zwei unterschiedliche Winkelstellungen aufweisen.

15. Erdwärmetauscher (1) zur Versorgung eines Gebäudes (2) mit Luft, umfassend wenigstens einem Enthalpieaustauscher (10) nach einem der vorstehenden Ansprüche.

## Claims

1. An enthalpy exchanger (10) for an earth-to-air heat exchanger (1), said exchanger comprising:
- an air duct (24) including a side wall (30) provided with openings (32);
- a waterproof-breathable membrane (26) disposed on an outer surface of the side wall (30) of the air duct or on an inner surface of this side wall; and
**characterised in that** the exchanger further includes:
- a porous outer layer (28), permeable to water vapour and designed to trap a volume of buffer air, said porous outer layer covering the assembly formed by the side wall (30) of the air duct and the waterproof-breathable membrane (26).

2. The enthalpy exchanger according to claim 1, wherein the porous outer layer (28) is a geotextile.

3. The enthalpy exchanger according to claim 1 or claim 2, wherein the porous outer layer (28) has a thickness comprised between 1 and 50 mm.

4. The enthalpy exchanger according to any one of the preceding claims, wherein the waterproof-breathable membrane (26) has a thickness comprised between 1 and 500 µm.

5. The enthalpy exchanger according to any one of the preceding claims, wherein:
- the waterproof-breathable membrane (26), disposed on the outer surface of the side wall (30) of the air duct, has a width greater than the outer circumference of this side wall, so as to define two membrane flanges (26a) which extend radially and which are superposed along a circumferential direction (Dc) of the side wall;
- the porous outer layer (28) has a width greater than the outer circumference of this side wall (30), so as to define two outer layer flanges (28a) which extend radially and which are superposed on either side of the two membrane flanges (26a) along the circumferential direction (Dc);
- the exchanger includes a clamping bracket (36) clamping the superposition of the two membrane flanges (26a) and the two outer layer flanges (28a).

6. The enthalpy exchanger according to claim 5, wherein the clamping bracket (36) extends substantially parallel to a longitudinal axis (20) of the air duct (24), and has a U-shaped section that is open radially inwardly.

7. The enthalpy exchanger according to any one of claims 1 to 4, wherein the waterproof-breathable membrane (26) is glued on at least one gluing zone (40) of the side wall (30) of the air duct.

8. The enthalpy exchanger according to any one of the preceding claims, wherein the area of the openings (32) of the side wall (30) represents more than 50% of the total area of this side wall.

9. The enthalpy exchanger according to any one of the preceding claims, wherein the air duct (24) has an internal frame (40) connected to the side wall (30), the internal frame preferably comprising a central shaft (42) as well as arms (44) linking the shaft (42) to the side wall (30) of the duct.

10. The enthalpy exchanger according to any one of the preceding claims, wherein the openings (32) are arranged in a staggered manner on the side wall.

11. The enthalpy exchanger according to claim 9, wherein the side wall (30) of the duct is a spiral extending along the longitudinal axis (20) of the duct and defining a main opening (32a) also in the shape of a spiral, the spiral being interrupted so as to form a plurality of spiral segments (30a) delimiting between their opposite ends secondary openings (32b) of the side wall, each spiral segment (30a) being carried by at least one of the arms (44) of the internal frame (40) of the duct.

12. The enthalpy exchanger according to claim 11, wherein at least three spiral segments (30a) are provided on each spiral turn.

13. The enthalpy exchanger according to any one of the preceding claims, comprising several air duct modules (24a) assembled axially to each other, said modules (24a) preferably having a male mechanical coupling portion (52) at one of its axial ends, as well as a female mechanical coupling portion (54) at the other of its axial ends.

14. The enthalpy exchanger according to claim 13, comprising at least two air duct modules (24a) of identical design arranged directly consecutively within the exchanger, and respectively having two distinct angular positions.

15. An earth-to-air heat exchanger (1) for the air supply of a building (2), comprising at least one enthalpy exchanger (10) according to any one of the preceding claims.
